# EUROPEAN PATENT APPLICATION

(11) **EP 3 998 405 A1**
(43) Date of publication of application: **18.05.2022**
(21) Application number: 20873012.7
(22) Date of filing: 23.09.2020
(51) Int. Cl.: F04D 17/04, F04D 29/056

(54) **FAN ASSEMBLY AND AIR CONDITIONER**

(30) Priority: 30.09.2019 JP 2019180828; 18.06.2020 JP 2020104988
(71) Applicant: DAIKIN INDUSTRIES, LTD., Osaka-shi, Osaka 530-8323 (JP)
(72) Inventor: SATOU, Junichi, Osaka-shi, Osaka 530-8323 (JP); FUJII, Hideki, Osaka-shi, Osaka 530-8323 (JP)
(74) Representative: Conti, Marco
(86) International application number: PCT/JP2020/035802
(87) International publication number: WO 2021/065622

(57) **Abstract**

A fan assembly (80) includes a cross-flow fan (23), a cross-flow fan motor (24), a first bearing (60), and a second bearing (70). The cross-flow fan (23) has a first end (23a) and a second end (23b). The cross-flow fan motor (24) includes a stator (51) and an outer rotor (52) fixed to the first end (23a). The first bearing (60) rotatably supports the first end (23a). The second bearing (70) rotatably supports the second end (23b). The first bearing (60) is a rolling bearing. The second bearing (70) includes a second bearing elastic body (74) directly or indirectly supporting the second end (23b).

## Description

### TECHNICAL FIELD

The present disclosure relates to a fan assembly and an air conditioner.

### BACKGROUND ART

Patent Literature 1 (Japanese Laid-Open Patent Publication No. 2004-324633) discloses a cross-flow fan. Each end of the cross-flow fan is provided with a shaft, which is supported by a sliding bearing made of a resin. Each of the sliding bearings is supported by a bearing holder made of rubber.

### SUMMARY OF THE INVENTION

### <Technical Problem>

In order to increase the airflow volume, a larger cross-flow fan should be used and rotated faster. Such a large cross-flow fan is so heavy that the shaft of the cross-flow fan may be displaced due to deformation of the baring holder made of rubber. Such displacement causes backlash and noise, which may shorten a life of the cross-flow fan.

### <Solutions to Problem>

A fan assembly according to a first aspect includes a cross-flow fan, a motor, a first bearing, and a second bearing. The cross-flow fan has a first end and a second end. The motor includes a stator and an outer rotor fixed to the first end. The first bearing rotatably supports the first end. The second bearing rotatably supports the second end. The first bearing is a rolling bearing. The second bearing includes a second bearing elastic body directly or indirectly supporting the second end.

According to this configuration, the fan assembly includes the first bearing and the second bearing. The first bearing is constituted as a rolling bearing. This configuration inhibits displacement of a shaft of the cross-flow fan, to suppress noise. Furthermore, the second bearing is supported by the second bearing elastic body. The fan assembly is thus easily assembled.

A fan assembly according to a second aspect is the fan assembly according to the first aspect, in which the second bearing is a sliding bearing.

According to this configuration, the second bearing is constituted as a sliding bearing. In comparison to a case where the second bearing is constituted as a rolling bearing, this configuration achieves cost reduction.

A fan assembly according to a third aspect is the fan assembly according to the first or second aspect, in which the first bearing includes an inner ring and an outer ring configured to rotate relatively to the inner ring. The motor further includes a motor shaft fixed to the stator. The inner ring is fixed to the motor shaft.

According to this configuration, the inner ring is fixed to the motor shaft. This configuration thus inhibits shift of the first bearing relative to the motor, to suppress noise.

A fan assembly according to a fourth aspect is the fan assembly according to the third aspect, in which the first bearing includes a first bearing elastic body. The outer ring is fixed to the outer rotor via the first bearing elastic body.

According to this configuration, the outer ring is fixed to the outer rotor via the first bearing elastic body. This configuration inhibits the outer ring from sliding relatively to the outer rotor, to inhibit seizure of the outer ring.

A fan assembly according to a fifth aspect is the fan assembly according to the fourth aspect, in which the outer rotor has a concave portion. The first bearing is accommodated in the concave portion.

According to this configuration, the first bearing is accommodated in the concave portion of the outer rotor. The outer rotor thus retains the first bearing more firmly.

A fan assembly according to a sixth aspect is the fan assembly according to the fourth or fifth aspect, in which the first bearing elastic body receiving external force is configured to be deformed by at least 1 mm in a radial direction of the first bearing elastic body.

According to this configuration, the first bearing elastic body is configured to be radially flattened by at least 1 mm. In a state where the rolling bearing retains the motor shaft, the first bearing elastic body effectively absorbs vibration.

A fan assembly according to a seventh aspect is the fan assembly according to any one of the fourth to sixth aspects, in which the first bearing further includes a rolling element. The rolling element is in contact with both the inner ring and the outer ring. The outer ring includes a first outer ring member and a second outer ring member. The first outer ring member is in contact with the rolling element. The second outer ring member surrounds the first outer ring member. The first bearing elastic body is in contact with the second outer ring member.

According to this configuration, the first bearing elastic body is in contact with the second outer ring member surrounding the first outer ring member. The first bearing elastic body is thus positioned radially apart from the motor shaft, to effectively absorb vibration.

A fan assembly according to an eighth aspect is the fan assembly according to the seventh aspect, in which the first outer ring member is made of a metal and the second outer ring member is made of a resin.

According to this configuration, the first outer ring member and the second outer ring member are made of a metal and a resin, respectively. The second outer ring member is thus lighter in weight, to need smaller torque to rotate the cross-flow fan.

A fan assembly according to a ninth aspect is the fan assembly according to the seventh or eighth aspect, in which an axial length of the second outer ring member is larger than an axial length of the first outer ring member.

A fan assembly according to a tenth aspect is the fan assembly according to any one of the third to ninth aspects, in which an axial length of the outer ring is larger than an axial length of the inner ring.

A fan assembly according to an eleventh aspect is the fan assembly according to the first or second aspect, in which the first bearing includes an inner ring and an outer ring. The outer ring rotates relatively to the inner ring. The outer ring is fixed to the stator.

According to this configuration, the outer ring is fixed to the stator. This configuration thus inhibits shift of the first bearing relative to the motor, to suppress noise.

A fan assembly according to a twelfth aspect is the fan assembly according to the eleventh aspect, in which the motor further includes a motor shaft. The motor shaft is fixed to the outer rotor. The first bearing includes a first bearing elastic body. The inner ring is fixed to the motor shaft via the first bearing elastic body.

According to this configuration, the inner ring is fixed to the motor shaft via the first bearing elastic body. This configuration inhibits the inner ring from sliding relatively to the motor shaft, to inhibit seizure of the inner ring.

A fan assembly according to a thirteenth aspect is the fan assembly according to the first aspect, in which the second bearing is a rolling bearing.

According to this configuration, the second bearing is constituted as a rolling bearing. In comparison to the case where the second bearing is constituted as a sliding bearing, the fan assembly has a longer life.

A fan assembly according to a fourteenth aspect is the fan assembly according to the thirteenth aspect, in which the first bearing further includes a first bearing elastic body. The first bearing elastic body directly or indirectly supports the first end. The second bearing elastic body is softer than the first bearing elastic body.

According to this configuration, the second bearing elastic body is softer than the first bearing elastic body. The second bearing elastic body is thus deformed to facilitate assembling the fan assembly.

A fan assembly according to a fifteenth aspect is the fan assembly according to the thirteenth or fourteenth aspect, in which the first bearing includes an inner ring and an outer ring. The outer ring rotates relatively to the inner ring. The motor further includes a motor shaft. The motor shaft is fixed to the stator. The inner ring is fixed to the motor shaft.

According to this configuration, the inner ring is fixed to the motor shaft. This configuration thus inhibits shift of the first bearing relative to the motor, to suppress noise.

A fan assembly according to a sixteenth aspect is the fan assembly according to any one of the thirteenth to fifteenth aspects, in which the second end of the cross-flow fan is provided with an accommodating portion. The second bearing is accommodated in the accommodating portion.

According to this configuration, the second bearing is accommodated in the accommodating portion of the cross-flow fan. The cross-flow fan thus retains the second bearing more firmly.

An air conditioner according to a seventeenth aspect includes the fan assembly according to any one of the first to sixteenth aspects.

According to this configuration, the air conditioner has less noise caused by backlash of the fan assembly.

### BRIEF DESCRIPTION OF THE DRAWINGS

FIG. 1 is a diagram depicting a configuration of an air conditioner 100.
FIG. 2 is a diagram depicting a structure of a fan assembly 80 according to a first embodiment.
FIG. 3 is a diagram depicting a step of assembling the fan assembly 80 according to the first embodiment.
FIG. 4 is a sectional view of a first bearing 60.
FIG. 5 is a sectional view of a first bearing 60 mounted in a fan assembly 80 according to a modification example 1A of the first embodiment.
FIG. 6 is a partially cut-away exploded view depicting a structure of a fan assembly 80' according to a modification example 1C of the first embodiment.
FIG. 7 is a partially cut-away perspective view depicting the structure of the fan assembly 80' according to the modification example 1C of the first embodiment.
FIG. 8 is a perspective view of a second outer ring member 622 of the fan assembly 80'.
FIG. 9 is a perspective view of a first bearing elastic body 64 of the fan assembly 80'.
FIG. 10 is a diagram depicting a structure of a fan assembly 80 according to a second embodiment.
FIG. 11 is a diagram depicting a step of assembling the fan assembly 80 according to the second embodiment.
FIG. 12 is a diagram depicting a step of assembling a fan assembly 80 according to a modification example 2A of the second embodiment.
FIG. 13 is a diagram depicting a structure of a fan assembly 80 according to a third embodiment.
FIG. 14 is a diagram depicting a structure of a fan assembly 80 according to a modification example 3A of the third embodiment.

### DESCRIPTION OF EMBODIMENTS

### <First embodiment

### (1) Overall configuration

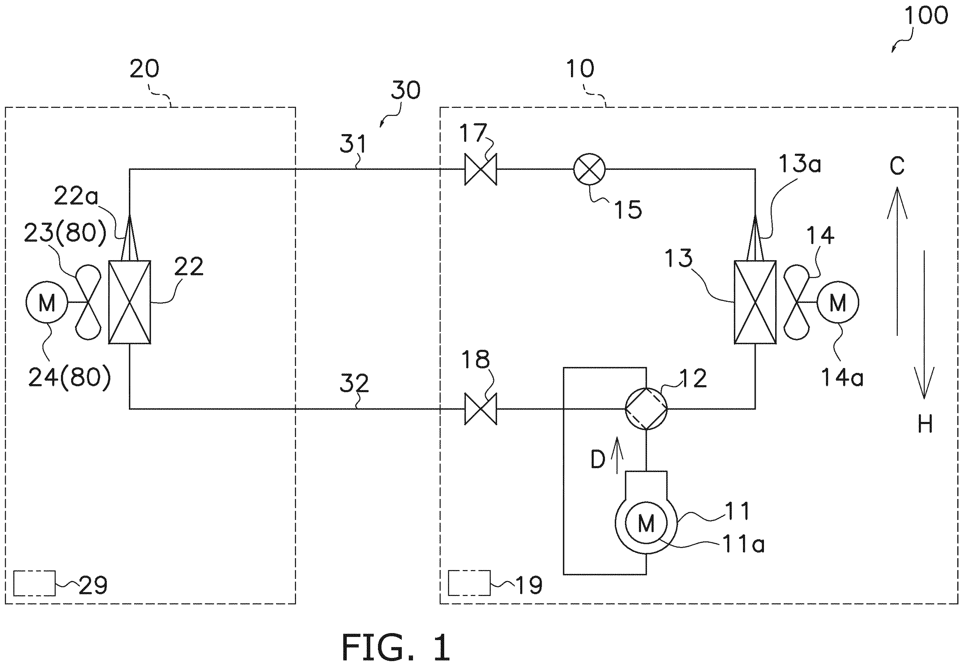

FIG. 1 depicts an air conditioner 100 employing a fan assembly 80 according to the first embodiment. The air conditioner 100 includes an outdoor unit 10, an indoor unit 20, and a connection piping 30. The fan assembly 80 is mounted in the indoor unit 20.

### (2) Detailed configuration of air conditioner 100

### (2-1) Outdoor unit 10

The outdoor unit 10 functions as a heat source. The outdoor unit 10 includes a compressor 11, a four-way switching valve 12, an outdoor heat exchanger 13, an outdoor fan 14, an outdoor expansion valve 15, a liquid shutoff valve 17, a gas shutoff valve 18, and an outdoor control unit 19.

### (2-1-1) Compressor 11

The compressor 11 compresses a low-pressure gas refrigerant to generate a highpressure gas refrigerant. The compressor 11 includes a compressor motor 11a. The compressor motor 11a generates motive power for refrigerant compression. The highpressure gas refrigerant is discharged from the compressor 11 in a direction indicated by an arrow D.

### (2-1-2) Four-way switching valve 12

The four-way switching valve 12 switches a circulation direction of the refrigerant. During cooling operation, the four-way switching valve 12 provides connection indicated by solid lines to cause the refrigerant to flow in a direction indicated by arrow C. During heating operation, the four-way switching valve 12 provides connection indicated by broken lines to cause the refrigerant to flow in a direction indicated by arrow H.

### (2-1-3) Outdoor heat exchanger 13

The outdoor heat exchanger 13 executes heat exchange between the refrigerant and air. During cooling operation, the outdoor heat exchanger 13 functions as a heat radiator or a condenser. During heating operation, the outdoor heat exchanger 13 functions as a heat absorber or an evaporator. The outdoor heat exchanger 13 includes a flow divider 13a.

### (2-1-4) Outdoor fan 14

The outdoor fan 14 generates an air flow to promote heat exchange between the refrigerant and air in the outdoor heat exchanger 13. The outdoor fan 14 is driven by an outdoor fan motor 14a.

### (2-1-5) Outdoor expansion valve 15

The outdoor expansion valve 15 decompresses the refrigerant. The outdoor expansion valve 15 is configured as an electric valve having an adjustable opening degree.

### (2-1-6) Liquid shutoff valve 17

The liquid shutoff valve 17 is configured to close the refrigerant flow path in accordance with operation by the installation worker.

### (2-1-7) Gas shutoff valve 18

The gas shutoff valve 18 is configured to close the refrigerant flow path in accordance with operation by the installation worker.

### (2-1-8) Outdoor control unit 19

The outdoor control unit 19 reads values from sensors in the outdoor unit 10. The outdoor control unit 19 further controls actuators in the outdoor unit 10. Examples of the actuators controlled by the outdoor control unit 19 include the compressor motor 11a, the four-way switching valve 12, the outdoor fan motor 14a, and the outdoor expansion valve 15. The outdoor control unit 19 includes a microcomputer and a memory, for example.

### (2-2) Indoor unit 20

The indoor unit 20 provides a user with cold or heat. The indoor unit 20 includes an indoor heat exchanger 22, a fan assembly 80, and an indoor control unit 29.

### (2-2-1) Indoor heat exchanger 22

The indoor heat exchanger 22 executes heat exchange between the refrigerant and air. During cooling operation, the indoor heat exchanger 22 functions as a heat absorber or an evaporator. During heating operation, the indoor heat exchanger 22 functions as a heat radiator or a condenser. The indoor heat exchanger 22 includes a flow divider 22a.

### (2-2-2) Fan assembly 80

The fan assembly 80 includes a cross-flow fan 23 and a cross-flow fan motor 24. The fan assembly 80 will be described later in terms of its structure.

### (2-2-3) Indoor control unit 29

The indoor control unit 29 reads values from sensors in the indoor unit 20. The indoor control unit 29 further controls actuators in the indoor unit 20. Examples of the actuators controlled by the indoor control unit 29 include the cross-flow fan motor 24. The indoor control unit 29 includes a microcomputer and a memory, for example. The indoor control unit 29 is configured to communicate with the outdoor control unit 19 via an unillustrated communication line.

### (2-3) Connection piping 30

The connection piping 30 connects the outdoor unit 10 and the indoor unit 20. The connection piping 30 includes a liquid connection pipe 31 and a gas connection pipe 32.

### (2-3-1) Liquid connection pipe 31

The liquid connection pipe 31 principally allows a liquid refrigerant or a gas-liquid two-phase refrigerant to pass therethrough. The liquid connection pipe 31 is connected to the liquid shutoff valve 17.

### (2-3-2) Gas connection pipe 32

The gas connection pipe 32 principally allows a gas refrigerant to pass therethrough. The gas connection pipe 32 is connected to the gas shutoff valve 18.

### (3) Fan assembly 80

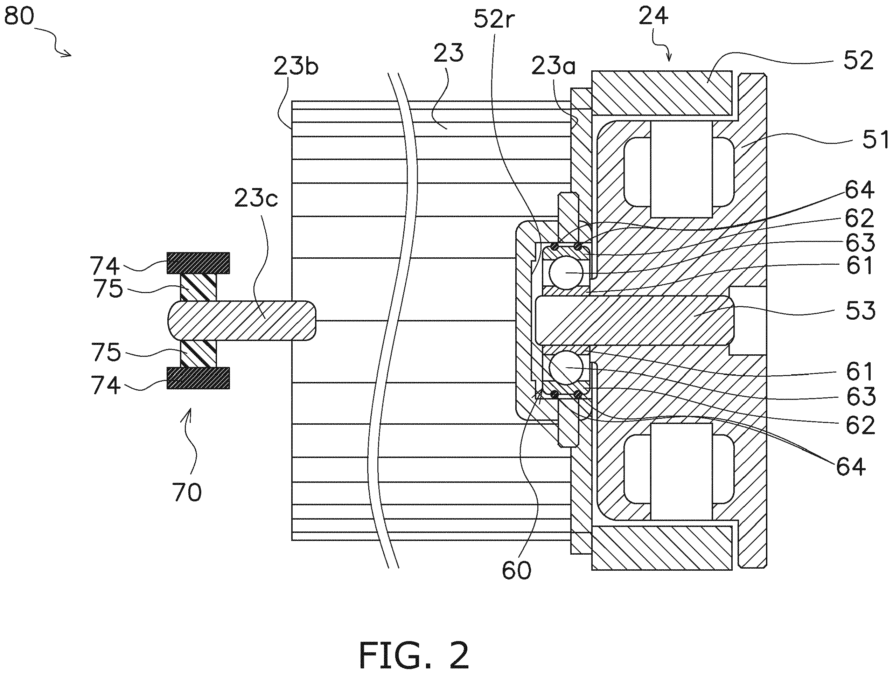

FIG. 2 depicts the structure of the fan assembly 80 according to the first embodiment. The fan assembly 80 includes the cross-flow fan 23, the cross-flow fan motor 24, a first bearing 60, and a second bearing 70.

### (3-1) Cross-flow fan 23

The cross-flow fan 23 generates an air flow to promote heat exchange between the refrigerant and air in the indoor heat exchanger 22. The cross-flow fan 23 further provides the user with conditioned air.

The cross-flow fan 23 has a cylindrical shape. The cross-flow fan 23 has a first end 23a and a second end 23b. The cross-flow fan 23 further includes a fan shaft 23c extending from the second end 23b.

### (3-2) Cross-flow fan motor 24

The cross-flow fan motor 24 drives the cross-flow fan 23. The cross-flow fan motor 24 is an outer motor type motor. The cross-flow fan motor 24 includes a stator 51, an outer rotor 52, and a motor shaft 53.

The stator 51 includes a coil winding, and generates a fluctuating magnetic field.

The outer rotor 52 surrounds the outer circumference of the stator 51. The outer rotor 52 includes a permanent magnet and magnetically interacts with the stator 51 to rotate. The outer rotor 52 is attached to the first end 23a of the cross-flow fan 23. The outer rotor 52 has a concave portion 52r.

The motor shaft 53 is fixed to the stator 51 and projects from the stator 51 toward the cross-flow fan 23.

### (3-3) First bearing 60

The first bearing 60 supports the outer rotor 52 in a rotatable manner. The first bearing 60 is constituted as a rolling bearing. The first bearing 60 includes an inner ring 61, an outer ring 62, a rolling element 63, and a first bearing elastic body 64. The first bearing 60 is accommodated in the concave portion 52r.

The inner ring 61 is an annular member. The inner ring 61 is fixed to the motor shaft 53 by interference fitting.

The outer ring 62 is an annular member. The outer ring 62 surrounds the inner ring 61.

The rolling element 63 is in contact with both the inner ring 61 and the outer ring 62. The rolling element 63 rolls to smooth rotation of the outer ring 62.

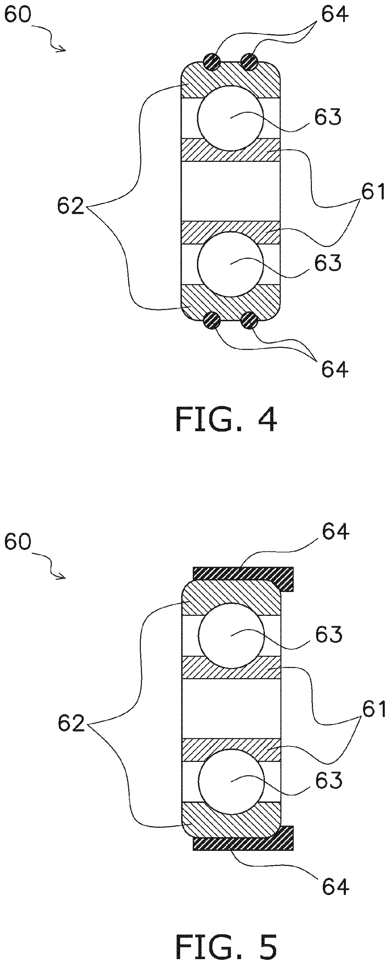

The first bearing elastic body 64 is an elastic member. The first bearing elastic body 64 directly or indirectly supports the first end 23a. As depicted in FIG. 4, the first bearing elastic body 64 has a ring shape. As depicted in FIG. 2, the first bearing elastic body 64 is in contact with an outer circumferential surface of the outer ring 62. The first bearing elastic body 64 is further in contact with the outer rotor 52. The outer rotor 52 holds the outer ring 62 via the first bearing elastic body 64.

### (3-4) Second bearing 70

The second bearing 70 supports the outer rotor 52 in a rotatable manner. The second bearing 70 is constituted as a sliding bearing. The second bearing 70 includes a second bearing main body 75 and a second bearing elastic body 74.

The second bearing main body 75 contains a resin or the like. The second bearing main body 75 supports the fan shaft 23c. The fan shaft 23c is configured to rotate while rubbing a surface of the second bearing main body 75.

The second bearing elastic body 74 is an elastic member. The second bearing elastic body 74 directly or indirectly supports the second end 23b. The second bearing elastic body supports the second bearing main body 75.

### (4) Assembling fan assembly 80

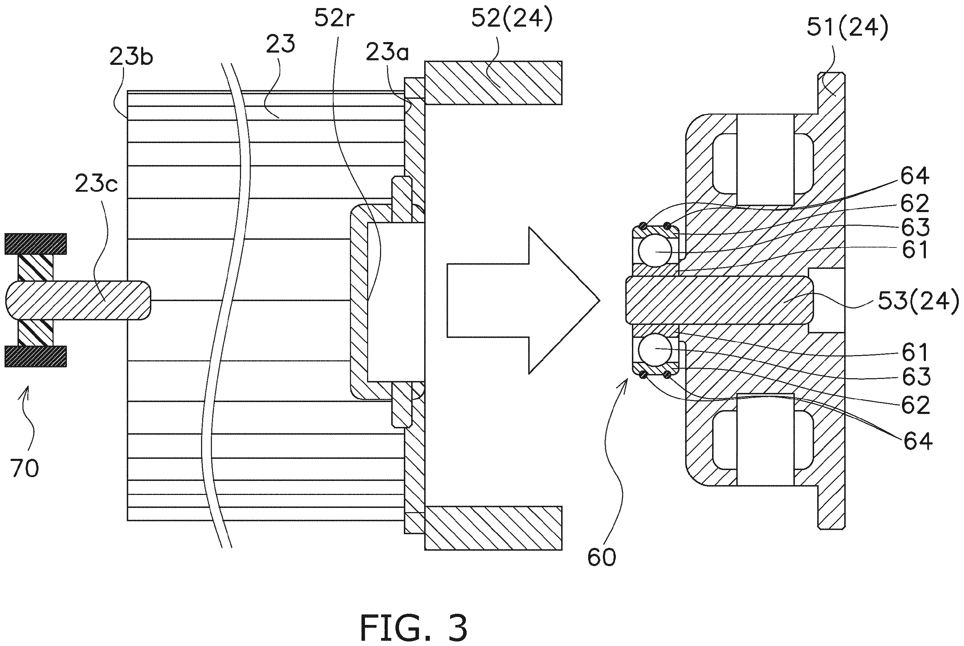

FIG. 3 depicts a step of assembling the fan assembly 80. The outer rotor 52 of the cross-flow fan motor 24 is initially attached to the first end 23a of the cross-flow fan 23.

Meanwhile, the inner ring 61 of the first bearing 60 is fixed to the motor shaft 53 by interference fitting. The expression "fixing by interference fitting" represents a state where a first member fixes a second member by fastening the second member by a method of press fitting or the like. The inner ring 61 has an inner diameter having almost no clearance with respect to an outer diameter of the motor shaft 53. The motor shaft 53 is press fitted to the inner ring 61 to achieve fixing by interference fitting. Two first bearing elastic bodies 64 each having the ring shape are attached to the outer circumferential surface of the outer ring.

Subsequently, the first bearing 60 is pushed into the concave portion 52r provided at the first end 23a of the cross-flow fan 23 and the outer rotor 52. The concave portion 52r has an inner diameter slightly larger than an outer diameter of the outer ring 62 and slightly smaller than an outer diameter of the first bearing elastic bodies 64. The first bearing elastic bodies 64 are elastically deformed when the first bearing 60 is pushed into the concave portion 52r. After the first bearing 60 is pushed into the concave portion 52r, the first bearing elastic bodies 64 push both the outer ring 62 and the outer rotor 52. The outer ring 62 and the outer rotor 52 can thus rotate together by such pressing force.

### (5) Characteristics

(5-1) The fan assembly 80 includes the first bearing 60 and the second bearing 70. The first bearing 60 is constituted as a rolling bearing. Therefore, the axis of the cross-flow fan 23 is inhibited from being displaced, thereby suppressing noise.

Furthermore, the second bearing 70 is supported by the second bearing elastic body 74. The fan assembly 80 is thus easily assembled.

(5-2) The second bearing 70 is constituted as a sliding bearing. Therefore, in comparison to a case where the second bearing 70 is constituted as a rolling bearing, the cost can be reduced.

(5-3) The inner ring 61 is fixed to the motor shaft 53. Therefore, the first bearing 60 is inhibited from shifting with respect to the cross-flow fan motor 24, thereby suppressing noise.

(5-4) The outer ring 62 is fixed to the outer rotor 52 via the first bearing elastic body 64. Therefore, the outer ring 62 is inhibited from sliding with respect to the outer rotor 52, thereby inhibiting galling of the outer ring 62.

(5-5) The air conditioner 100 suffers from less noise caused by backlash of the fan assembly 80.

### (6) Modification examples

### (6-1) Modification example 1A

As depicted in FIG. 4, the first bearing elastic body 64 according to the above embodiment has the ring shape. Alternatively, as depicted in FIG. 5, the first bearing elastic body 64 may have a cylindrical shape.

### (6-2) Modification example 1B

According to the above embodiment, the second bearing 70 includes the second bearing main body 75 and the second bearing elastic body 74. Alternatively, the second bearing 70 may include a single member having both a function of the second bearing main body 75 and a function of the second bearing elastic body 74. This member is made of a resin, for example.

### (6-3) Modification example 1C

### (6-3-1) Configuration

As depicted in FIG. 4, the outer ring 62 according to the above embodiment is constituted by a single member. Alternatively, the outer ring 62 may be constituted by a plurality of members.

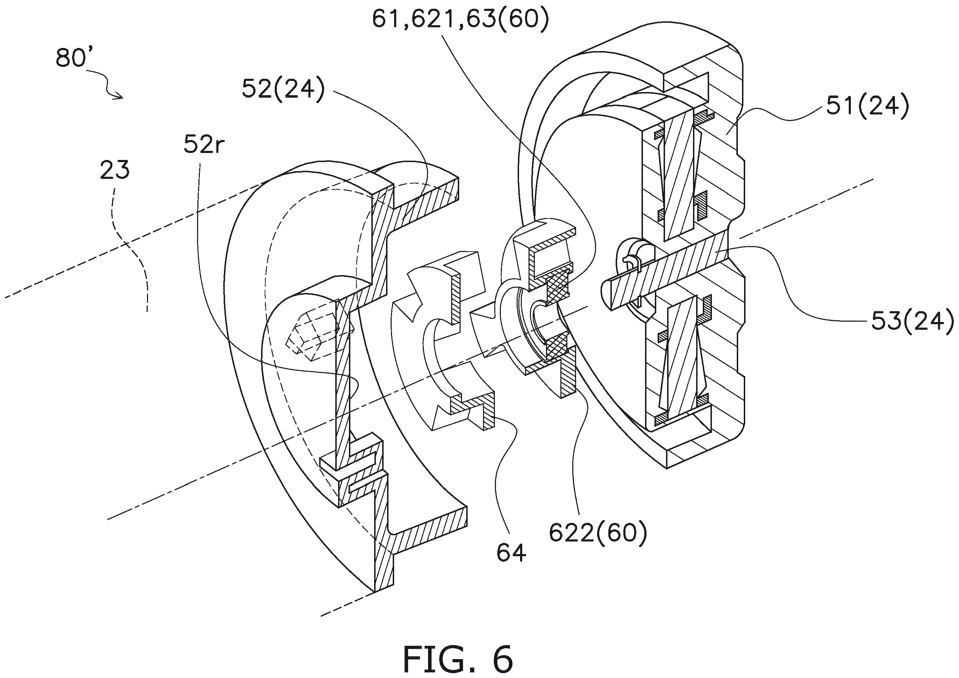

FIG. 6 depicts a structure of a fan assembly 80' according to the modification example 1C of the first embodiment. Similarly to the fan assembly 80 according to the first embodiment, the fan assembly 80' includes the cross-flow fan 23, the cross-flow fan motor 24, and the first bearing 60.

The cross-flow fan motor 24 includes the stator 51, the outer rotor 52, and the motor shaft 53. The motor shaft 53 is fixed to the stator 51 and projects from the stator 51 toward the cross-flow fan 23.

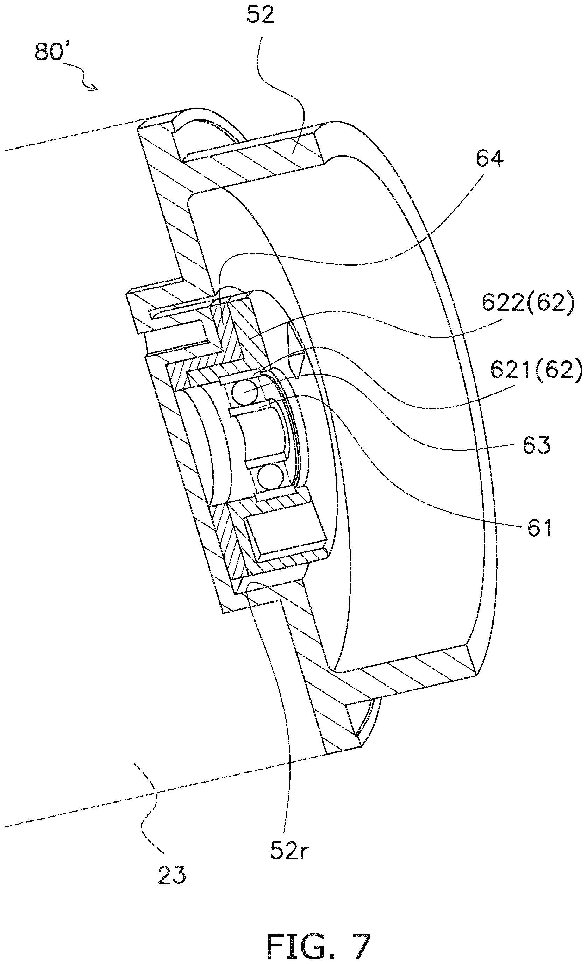

As depicted in FIG. 7, the first bearing 60 includes an inner ring 61, an outer ring 62, a rolling element 63, and a first bearing elastic body 64. The inner ring 61 is an annular member. The inner ring 61 is fixed to the motor shaft 53 by interference fitting. The rolling element 63 is in contact with both the inner ring 61 and the outer ring 62. The axial length of the outer ring 62 is larger than the axial length of the inner ring 61.

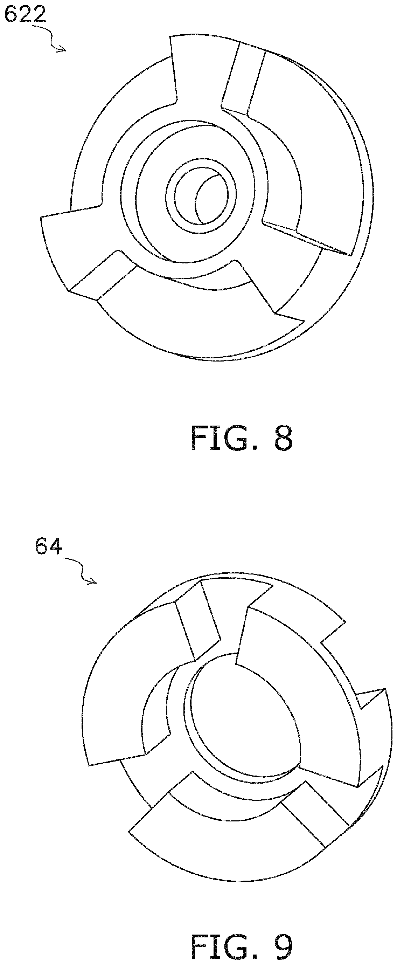

As depicted in FIG. 7, the outer ring 62 includes a first outer ring member 621 and a second outer ring member 622. The first outer ring member 621 is made of a metal. The second outer ring member 622 depicted in FIG. 8 is made of a resin. The first outer ring member 621 is in contact with the rolling element 63. As depicted in FIG. 7, the second outer ring member 622 surrounds the first outer ring member 621. The first bearing elastic body 64 is in contact with the second outer ring member 63. The axial length of the second outer ring member 622 is larger than the axial length of the first outer ring member 621.

FIG. 9 depicts an outline of the first bearing elastic body 64. The first bearing elastic body 64 receiving external force is configured to be deformed by at least 1 mm in a radial direction of the first bearing elastic body 64.

### (6-3-2) Characteristics

The first bearing elastic body 64 is configured to be radially deformed by at least 1 mm. Therefore, in a state where the first bearing 60 holds the motor shaft 53, the first bearing elastic body 64 effectively absorbs vibration.

The first bearing elastic body 64 is in contact with the second outer ring member 622 surrounding the first outer ring member 621. Therefore, the first bearing elastic body 64 is positioned radially apart from the motor shaft 53, thereby effectively absorbing vibration.

The first outer ring member 621 and the second outer ring member 622 are made of a metal and a resin, respectively. Therefore, the second outer ring member 622 is lighter in weight, thereby reducing the torque necessary to rotate the cross-flow fan 23.

### <Second embodiment

### (1) Configuration

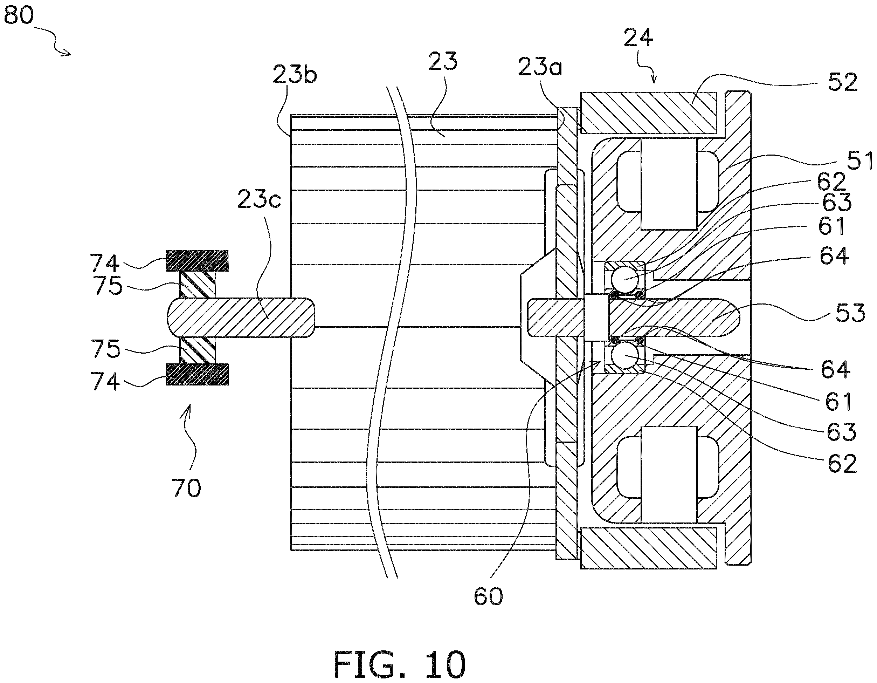

FIG. 10 depicts a structure of a fan assembly 80 according to the second embodiment. As in the first embodiment, the fan assembly 80 includes a cross-flow fan 23, a cross-flow fan motor 24, a first bearing 60, and a second bearing 70. However, the fan assembly 80 according to the second embodiment is different from that according to the first embodiment in terms of structures of the cross-flow fan motor 24 and the first bearing 60.

### (1-1) Cross-flow fan motor 24

The cross-flow fan motor 24 is an outer rotor type motor. The cross-flow fan motor 24 includes a stator 51, an outer rotor 52, and a motor shaft 53. Unlike the first embodiment, the motor shaft 53 is fixed to the outer rotor 52. The motor shaft 53 projects from the outer rotor 52 toward the stator 51.

### (1-2) First bearing 60

The first bearing 60 is constituted as a rolling bearing. The first bearing 60 includes an inner ring 61, an outer ring 62, a rolling element 63, and a first bearing elastic body 64.

The inner ring 61 is an annular member. The inner ring 61 is configured to be rotatable. The outer ring 62 is an annular member. The outer ring 62 is fixed to the stator 51 by interference fitting. The rolling element 63 is in contact with both the inner ring 61 and the outer ring 62. The rolling element 63 rolls to smooth rotation of the inner ring 61. The first bearing elastic body 64 is in contact with an inner circumferential surface of the inner ring 61. The first bearing elastic body 64 is further in contact with the motor shaft 53.

### (2) Assembling fan assembly 80

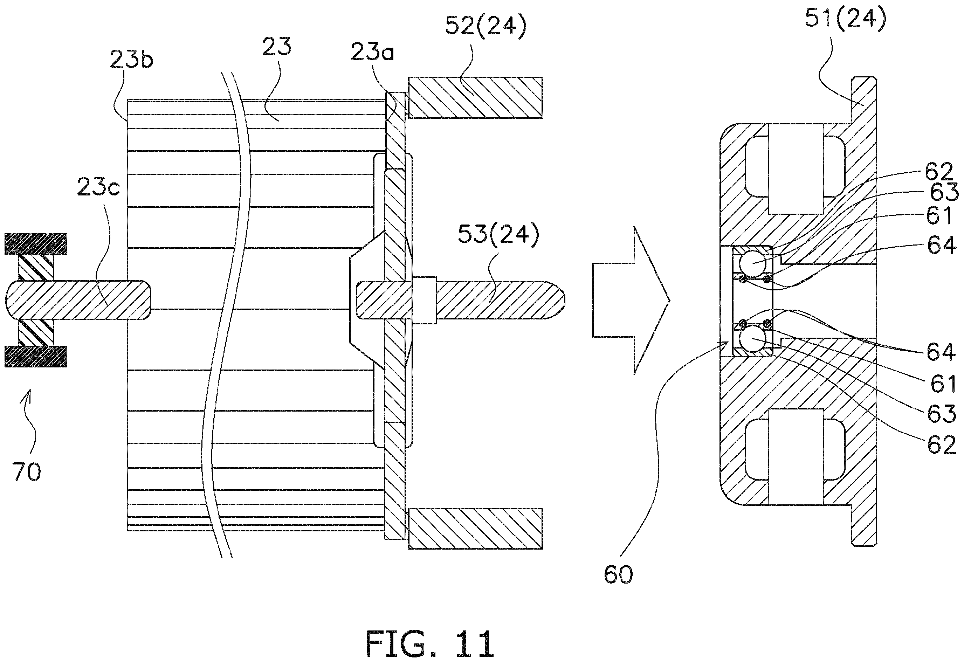

FIG. 11 depicts a step of assembling the fan assembly 80. The outer rotor 52 of the cross-flow fan motor 24 and the motor shaft 53 are initially attached to a first end 23a of the cross-flow fan 23. Meanwhile, the outer ring 62 of the first bearing 60 is fixed to the stator 51 by interference fitting. Two first bearing elastic bodies 64 each having a ring shape are attached to the inner circumferential surface of the inner ring 61.

Next, the motor shaft 53 is pushed into the inner ring 61 of the first bearing 60. The motor shaft has an outer diameter slightly larger than an inner diameter of the inner ring 61 and slightly larger than an inner diameter of the first bearing elastic bodies 64. The first bearing elastic bodies 64 are elastically deformed when the motor shaft 53 is pushed into the inner ring 61. After the motor shaft 53 is pushed into the inner ring 61, the first bearing elastic bodies 64 push both the inner ring 61 and the motor shaft 53. The inner ring 61 and the motor shaft 53 can thus rotate together by such pressing force.

### (3) Characteristics

(3-1) The outer ring 62 is fixed to the stator 51. Therefore, the first bearing 60 is inhibited from shifting with respect to the cross-flow fan motor 24, thereby suppressing noise.

(3-2) The inner ring 61 is fixed to the motor shaft 53 via the first bearing elastic body 64. Therefore, the inner ring 61 is inhibited from sliding with respect to the motor shaft 53, thereby inhibiting galling of the inner ring 61.

### (4) Modification examples

### (4-1) Modification example 2A

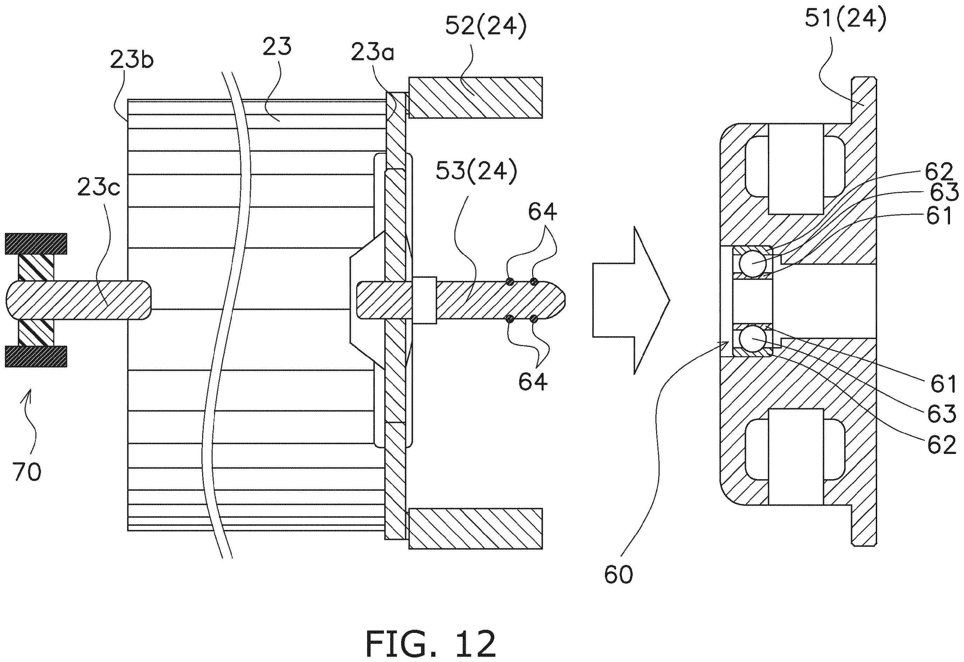

FIG. 12 depicts a step of assembling the fan assembly 80 according to the modification example 2A of the second embodiment. The step according to the modification example 2A is different from the step according to the second embodiment, and the two first bearing elastic bodies 64 are attached not to the inner circumferential surface of the inner ring 61 of the first bearing 60 but to the motor shaft 53. After that the motor shaft 53 and the first bearing elastic bodies 64 are pushed into the inner ring 61 of the first bearing 60.

Also with this assembling method, the outer ring 62 is fixed to the stator 51, thereby inhibiting shift of the first bearing 60 with respect to the cross-flow fan motor 24. As a result, noise is suppressed.

### (4-2) Modification example 2B

Any one of the modification examples of the first embodiment may be applied to the second embodiment.

### <Third embodiment>

### (1) Configurations

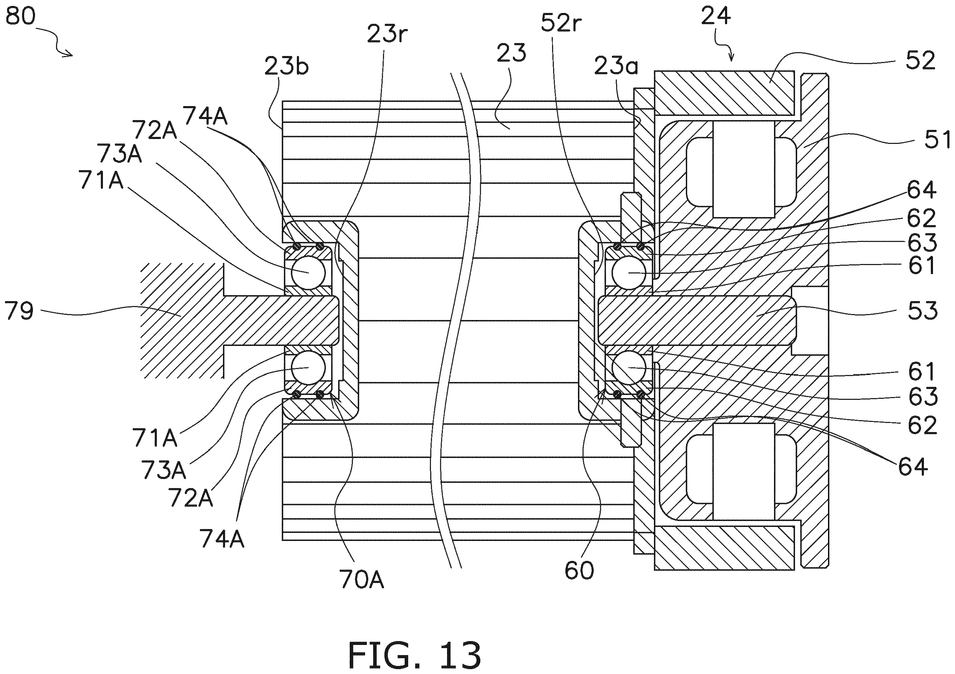

FIG. 13 depicts a structure of a fan assembly 80 according to the third embodiment. As in the first embodiment, the fan assembly 80 includes a cross-flow fan 23, a cross-flow fan motor 24, a first bearing 60, and a second bearing 70A. However, the cross-flow fan 23 and the second bearing 70A are different in terms of structures from those according to the first embodiment.

### (1-1) Cross-flow fan 23

The second end 23b of the cross-flow fan 23 is provided with an accommodating portion 23r configured to receive the second bearing 70A. Unlike the first embodiment, the cross-flow fan 23 does not include any fan shaft 23c.

### (1-2) Second bearing 70A

The second bearing 70A supports an outer rotor 52 in a rotatable manner. Unlike the first embodiment, the second bearing 70A is constituted as a rolling bearing. The second bearing 70A includes an inner ring 71A, an outer ring 72A, a rolling element 73A, and a second bearing elastic body 74A.

The inner ring 71A is an annular member. The inner ring 71A is fixed by interference fitting to a shaft body 79 fixed to a casing of the indoor unit 20.

The outer ring 72A is an annular member. The outer ring 72A surrounds the inner ring 71A.

The rolling element 73A is in contact with both the inner ring 71A and the outer ring 72A. The rolling element 73A rolls to smooth rotation of the outer ring 72A.

The second bearing elastic body 74A is an elastic member. The second bearing elastic body 74 has a ring shape. The second bearing elastic body 74A is in contact with an outer circumferential surface of the outer ring 72A. The second bearing elastic body 74A is further in contact with the cross-flow fan 23. The second bearing elastic body 74A is softer than the first bearing elastic body 64. The cross-flow fan 23 holds the outer ring 72A via the second bearing elastic body 74A.

### (2) Characteristics

(2-1) The second bearing 70 is constituted as a rolling bearing. Therefore, in comparison to the case where the second bearing 70 is constituted as a sliding bearing, the fan assembly 80 has a longer life.

(2-2) The second bearing elastic body 74 is softer than the first bearing elastic body 64. Therefore, the second bearing elastic body 74 is deformed to facilitate assembling the fan assembly 80.

(2-3) The inner ring 61 is fixed to a motor shaft 53 by interference fitting. Therefore, the first bearing 60 is inhibited from shifting with respect to the cross-flow fan motor 24, thereby suppressing noise.

### (3) Modification examples

### (3-1) Modification example 3A

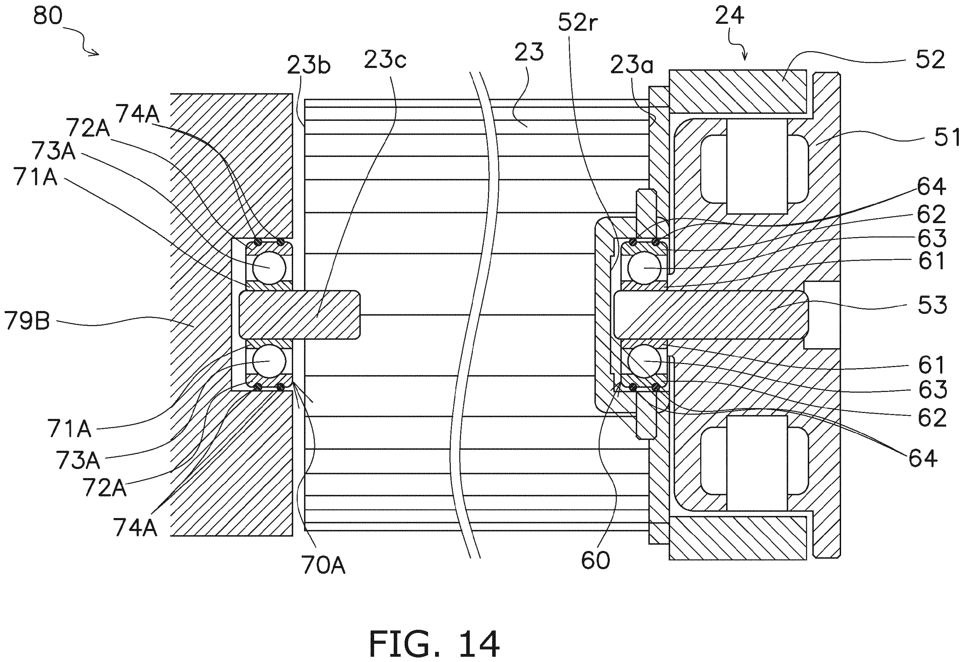

FIG. 14 depicts the fan assembly 80 according to the modification example 3A of the third embodiment. Unlike the third embodiment, the cross-flow fan 23 of the fan assembly 80 includes the fan shaft 23c.

The second bearing 70 is constituted as a rolling bearing. The inner ring 71A is fixed to the fan shaft 23c by interference fitting. The second bearing elastic body 74A is in contact with the outer circumferential surface of the outer ring 72A. The second bearing elastic body 74A is further in contact with a support 79B fixed to the casing of the indoor unit 20. The second bearing elastic body 74A is softer than the first bearing elastic body 64.

Also with this configuration, the second bearing 70 is constituted as a rolling bearing, and the fan assembly 80 thus has a longer life in comparison to the case where the second bearing 70 is constituted as a sliding bearing.

### (3-2) Modification example 3B

Any one of the modification examples of the first embodiment or the second embodiment may be applied to the third embodiment.

### <Closing>

The embodiments of the present disclosure have been described above. Various modifications to modes and details should be available without departing from the object and the scope of the present disclosure recited in the claims.

### REFERENCE SIGNS LIST

10: outdoor unit
20: indoor unit
23: cross-flow fan
23a: first end
23b: second end
23c: fan shaft
24: cross-flow fan motor
30: connection piping
51: stator
52: outer rotor
53: motor shaft
60: first bearing
61: inner ring
62: outer ring
63: rolling element
64: first bearing elastic body
70, 70A: second bearing
71A: inner ring
72A: outer ring
73A: rolling element
74, 74A: second bearing elastic body
75: second bearing main body
80: fan assembly
100: air conditioner

### CITATION LIST

### PATENT LITERATURE

Patent Literature 1: Japanese Laid-Open Patent Publication No. 2004-324633

## Claims

1. A fan assembly (80) comprising:
a cross-flow fan (23) having a first end (23a) and a second end (23b);
a motor (24) including a stator (51) and an outer rotor (52) fixed to the first end;
a first bearing (60) rotatably supporting the first end; and
a second bearing (70; 70A) rotatably supporting the second end;
wherein
the first bearing is a rolling bearing, and
the second bearing includes a second bearing elastic body (74: 74A) directly or indirectly supporting the second end.

2. The fan assembly according to claim 1, wherein
the second bearing is a sliding bearing (70).

3. The fan assembly according to claim 1 or 2, wherein
the first bearing includes an inner ring (61) and an outer ring (62) configured to rotate relatively to the inner ring,
the motor further includes a motor shaft (53) fixed to the stator, and
the inner ring is fixed to the motor shaft.

4. The fan assembly according to claim 3, wherein
the first bearing includes a first bearing elastic body (64), and
the outer ring is fixed to the outer rotor via the first bearing elastic body.

5. The fan assembly according to claim 4, wherein
the outer rotor has a concave portion (23r), and
the first bearing is accommodated in the concave portion.

6. The fan assembly according to claim 4 or 5, wherein
the first bearing elastic body receiving external force is configured to be deformed by at least 1 mm in a radial direction of the first bearing elastic body.

7. The fan assembly according to any one of claims 4 to 6, wherein
the first bearing further includes a rolling element (63) in contact with both the inner ring and the outer ring,
the outer ring includes
a first outer ring member (621) in contact with the rolling element, and
a second outer ring member (622) surrounding the first outer ring member, and
the first bearing elastic body is in contact with the second outer ring member.

8. The fan assembly according to claim 7, wherein
the first outer ring member is made of a metal, and the second outer ring member is made of a resin.

9. The fan assembly according to claim 7 or 8, wherein
an axial length of the second outer ring member is larger than an axial length of the first outer ring member.

10. The fan assembly according to any one of claims 3 to 9, wherein
an axial length of the outer ring is larger than an axial length of the inner ring.

11. The fan assembly according to claim 1 or 2, wherein
the first bearing includes an inner ring (61) and an outer ring (62) configured to rotate relatively to the inner ring, and
the outer ring is fixed to the stator.

12. The fan assembly according to claim 11, wherein
the motor further includes a motor shaft (53) fixed to the outer rotor,
the first bearing includes a first bearing elastic body (64), and
the inner ring is fixed to the motor shaft via the first bearing elastic body.

13. The fan assembly according to claim 1, wherein
the second bearing is a rolling bearing (70A).

14. The fan assembly according to claim 13, wherein
the first bearing further includes a first bearing elastic body (64) directly or indirectly supporting the first end, and
the second bearing elastic body is softer than the first bearing elastic body.

15. The fan assembly according to claim 13 or 14, wherein
the first bearing includes an inner ring (61) and an outer ring (62) configured to rotate relatively to the inner ring,
the motor further includes a motor shaft (53) fixed to the stator, and
the inner ring is fixed to the motor shaft.

16. The fan assembly according to any one of claims 13 to 15, wherein
the second end of the cross-flow fan is provided with an accommodating portion (23r), and
the second bearing is accommodated in the accommodating portion.

17. An air conditioner (100) comprising
the fan assembly according to any one of claims 1 to 16.
